# EUROPEAN PATENT APPLICATION

(11) **EP 1 113 212 A1**
(43) Date of publication of application: **04.07.2001**
(21) Application number: 99830813.4
(22) Date of filing: 30.12.1999
(51) Int. Cl.: F16M 7/00

(54) **Support foor fot heavy bodies**

(71) Applicant: Rexnord Marbett S.p.A., 42015 Correggio (Reggio Emilia) (IT)
(72) Inventor: Andreoli, Andrea, 41010 Villanova (Modena) (IT); Bellini, Emanuele, 41037 Mirandola (Modena) (IT)
(74) Representative: Maccalli, Marco

(57) **Abstract**

A support foot for heavy bodies, in particular operating machines and the like, comprising a stem (2) for joining the foot (1) to the machine, joined to a base block (3) intended to rest on a support surface. The support foot is completed by a covering element (22) for the base block (3), which can be removably joined to the said base block (3) and is designed to cover the base block (3), while allowing the stem (2) to protrude.

## Description

The present invention relates to a support foot, of the type used for supporting heavy bodies, in particular operating machines such as, for example, conveyor belts, on the ground or generally on a support surface.

Support feet of the above mentioned type are generally formed by a stem joined at one of its ends to a base block intended to rest on a support surface, for example the ground. At its other end the stem is joined, usually by means of screwing so as to allow adjustment of the foot height, to the heavy body which is to be supported, for example to an operating machine such as a conveyor belt, in particular to a frame thereof.

The connection between the stem and the base block may be of rigid type - in which case the feet are referred to as fixed feet - or such that they allow adjustment of the relative position of said stem and base block so that they may be adapted to support surfaces which are not flat; in this case they are referred to as articulated support feet.

Support feet having stems made of rigid synthetic material or steel, with varying diameters, depending on the maximum load which can be withstood by the support foot, are commercially available. The base blocks may also be made of rigid synthetic material or steel, again depending on the maximum load which can be withstood.

The base blocks, in particular those which are made of synthetic material, have a spatial configuration which results in the formation of recesses, cavities and interstices. For example, in the base blocks it is necessary to provide through-holes and, in corresponding locations, recesses for receiving elements for securing the base block to the ground, such as screws or the like. Ribs for reinforcing the base block may also be provided.

The presence of these recesses, cavities and interstices, although necessary for the reasons mentioned above, constitutes a problem since they may form a trap for dirt and bacteria during use. This is undesirable generally, but in particular in those cases where the support feet are used in order to support operating machines in plants for the processing or production of food products.

Another problem which may affect in particular support feet with base blocks made of synthetic material is the deterioration in their appearance over time, for example discoloration, owing to the action of aggressive external agents such as those which may be present in products used for cleaning the environments where the support feet are used. The synthetic materials used for manufacturing the support feet, for example polyamide with a glass-fibre filler, are in fact often chosen primarily on the basis of considerations relating to the load which the feet must withstand, something which often excludes the possibility of using synthetic materials of another type which are less subject to deterioration in their appearance over time, but which are entirely unsuitable from the point of view of resistance to loads. In other cases, where the maximum withstandable load requirements are not particularly stringent, lower quality synthetic materials are used in order to keep costs down, recycling surplus material from previous production cycles. These materials are subject to an even greater degree of deterioration in their appearance over time.

In view ofthe state of the art described, one object of the present invention is to provide to a support foot which does not have the drawbacks associated with the known support feet.

In accordance with the present invention, this object is achieved by means of a support foot for heavy bodies, in particular operating machines and the like, comprising a stem for joining the foot to the machine, joined to a base block intended to rest on a support surface, characterized in that it comprises a covering element for the base block, which is removably joined to the said base block and designed to cover the base block, while allowing the stem to protrude.

The characteristic features and advantages of the present invention will emerge clearly from the following detailed description of a possible practical embodiment thereof illustrated purely by way of a non-limiting example in the accompanying drawings in which:
Figure 1 is a cross-sectional and exploded axonometric view of a support foot in accordance with a possible practical embodiment of the present invention;
Figure 2 is a plan view of only the base block of the support foot according to Figure 1;
Figure 3 is a view of the support foot similar to that of Figure 2, but in a non-exploded form;
Figure 4 is a view, in a cross-sectional plane, of the support foot along the plane indicated by IV-IV in Figure 3; and
Figure 5 is a view, in a cross-sectional plane, similar to that of Figure 4, of a support foot in accordance with a variation of the practical embodiment shown in the previous figures.

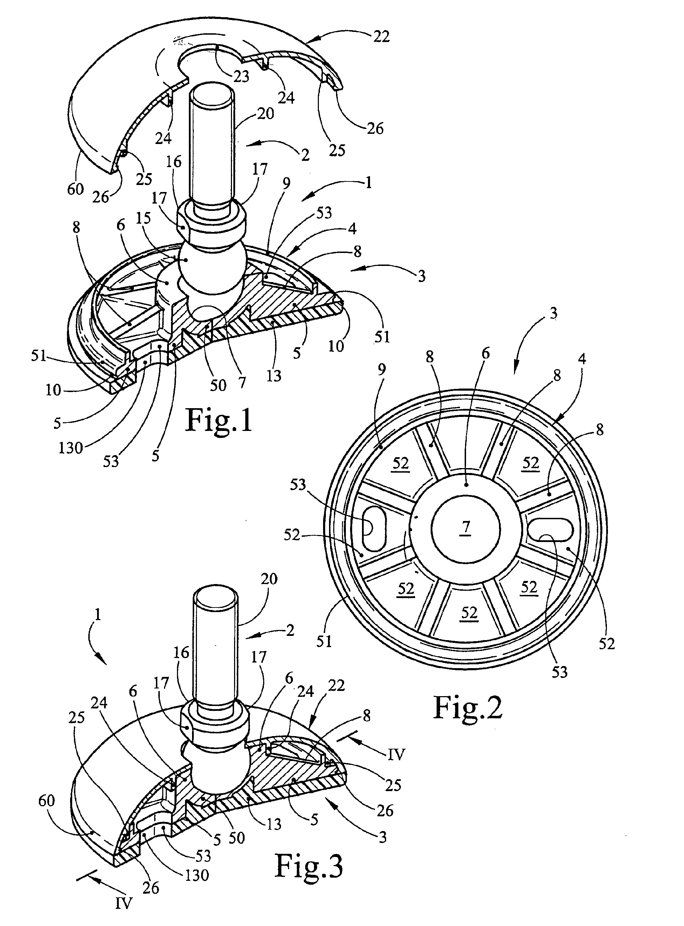

With reference to the drawings, and in particular to Figures 1 to 4, a support foot according to a possible embodiment of the present invention, indicated in its entirety by 1, comprises a stem 2 and a base block 3. Firstly the base block 3, and then the stem 2, will be described.

The base block 3 comprises a base-block body 4 which, in the example, has a circular shape in plan view, but which generally may have other shapes, and which for example is made as one piece from rigid synthetic material and formed so as to have a base 5 and an annular wall 6 which projects substantially centrally from the base 5. The annular wall 6, which in the example has a cylindrical shape, defines laterally a hemispherical seat 7 which is open at the top and delimited at the bottom by a portion 50 of the base 5.

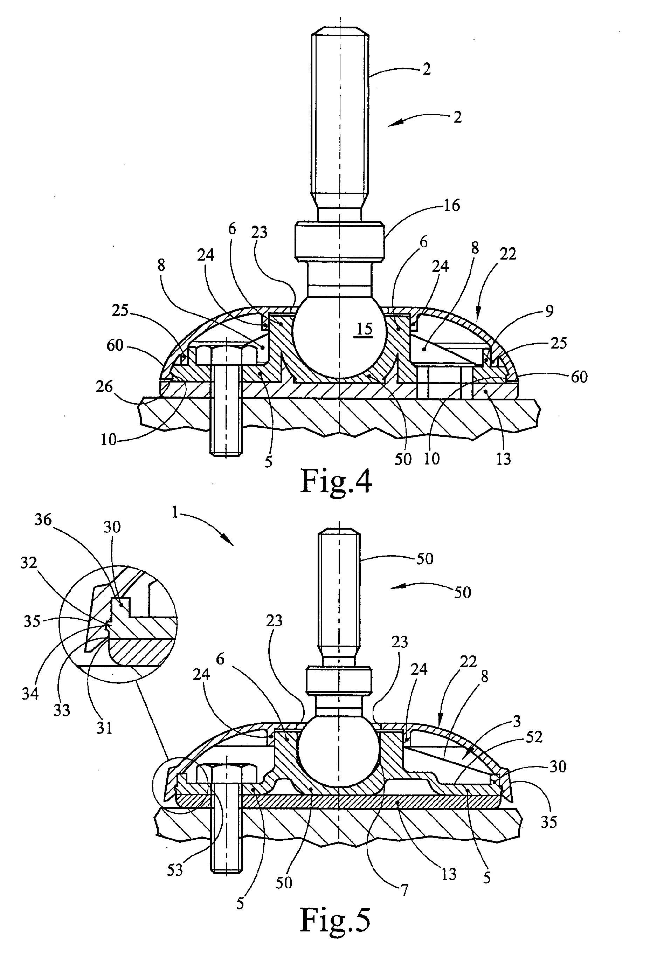

Perimetrally with respect to the annular wall 6, a succession of ribs 8, which in the example shown are arranged in a spoke-like manner and have a height, relative to the base 5, decreasing towards the external perimeter of the base-block body 4, connects the outer surface of the annular wall 6 to the base 5. Substantially at the far end of the ribs 8, an additional wall 9 or collar projects from the base 5, said wall having a height, with respect to the base 5, which is less than the height of the annular wall 6 and generally also has a smaller thickness. The ribs 8 divide the zone of the base 5 between the annular wall 6 and the collar 9 into a plurality of segments 52. Optionally, one or more of said segments 52 (in the example shown, two segments 52 which are diametrically opposite each other) have, formed in them, through-holes 53 which are preferably in the form of eyelets so as to allow, where desirable or necessary, securing to the ground or more generally to the surface on which the base block 3 rests, for example by means of screws (such as that shown in Figure 4 for example).

A groove 10 is formed at the bottom along an outer peripheral edge 51 of the base 5, said edge being preferably tapered upwards.

A cushion 13, which in the example is disc-shaped and made of elastomeric material, is mounted underneath the base 5 and has the function of preventing slipping of the foot on the support surface and of damping the vibrations of the operating machine which are transmitted to the base block 3 via the stem 2. The cushion 13 extends peripherally beyond the outer peripheral edge 51 of the base 5. Where the base 5 is provided with through-holes 53 for receiving screws or the like for securing the base block to the ground or to the support surface, the cushion 13 will be provided with corresponding through-holes 130.

The stem 2 comprises a threaded cylindrical portion 20 for joining to the heavy body (not shown) which the foot is intended to support. The end 15 of the stem 2 which is joined to the base block 3 is substantially spherical, preferably having a diameter greater than the diameter of the portion 20 of the stem, said diameter of the spherical end 15 of the stem 2 substantially corresponding to the diameter of the hemispherical seat 7 provided in the base block 3. A substantially circular collar 16 which has a maximum diameter equal to the diameter of the spherical end 15 is provided between the stem portion 20 and the spherical end 15 thereof, said collar having two opposite milled areas 17 for engagement with a spanner for screwing the portion 20 into the heavy body which is to be supported by the foot.

The support foot 1 is completed by a covering and lining cap 22, having a shape matching that of the base-block body 4 and preferably, but not exclusively, also being made of synthetic material, the outer side thereof being substantially smooth and devoid of irregularities, recesses or interstices. The cap 22 has a central hole 23 with a diameter at least equal to the diameter of the stem 2 and preferably at least equal to the diameter of the hemispherical seat 7. The inner side of the cap 22 has, formed on it, a first more internal circumferential rib 24, a second circumferential rib 25, concentric with and outside the first rib 24 and, along an outer peripheral edge 60, a circumferential tooth 26 projecting towards the inside of the cap 22. The internal diameter of the first circumferential rib 24 corresponds to the external diameter of the annular wall 6, the internal diameter of the second circumferential rib 25 corresponds to the external diameter of the collar 9, and the diameter of the circumferential tooth 26 corresponds to the diameter of the outer peripheral edge 51 of the base-block body 4 in the region of the groove 10.

In order to assemble the foot 1, the spherical end 15 of the stem 2 is inserted into the hemispherical seat 7. This type of connection allows relative inclination of the stem and the base block, i.e. makes the support foot articulated, but is not be regarded as limiting in any way for the purposes of the present invention, which finds immediate application both in the case of articulated support feet of another type, as well as fixed support feet as well.

If it is envisaged securing the support foot to the ground or, more generally, to the support surface, the screws or other pre-chosen means for performing said securing operation are then applied.

The cap 22 is then mounted onto the base block 3 by exerting a light pressure, the ribs 24 and 25 thereof fitting, with slight interference, onto an upper outer zone of the annular wall 6 and onto the collar 9, respectively, while the circumferential tooth 26, as a result of resilient bending of the cap, slides on the tapered outer peripheral edge 51 of the base block 3 until it enters inside the groove 10, snap-engaging onto the base 5. The top portion of the cap 22 between the central hole 23 and the circumferential rib 24 rests on the top edge of the annular wall 6. The outer edge 60 of the cap 22 is situated flush with the edge of the cushion 13.

It should be noted that the covering cap 22 may also be fitted to the base block 3 before insertion of the spherical end 15 of the stem 2 inside the hemispherical seat 7 and may also be removed from the base block 3 without the need for preliminary disassembly of the stem 2.

Once the cap 22 has been mounted on the base block 3, the support foot 1 is at least at the top substantially closed, externally substantially smooth and devoid of recesses and interstices. The recesses and interstices provided in the base block 3, for example the cavities between the ribs 8 in the segments 52 of the base 5, are in fact made inaccessible from the outside owing to the closure provided by the cap 22. The joint, with slight interference, between the ribs 24 and 25 of the cap 22 and the annular wall 6 and the collar 9 of the base block 3, respectively, ensures an adequate seal preventing the infiltration of liquids. In this way the support foot is prevented from becoming a trap for dirt and bacteria. It should be noted that the seal could be similarly formed in another manner, for example by providing gaskets, O-rings or by using adhesive and the like.

Moreover, since the cap 22 does not have to withstand particular forces, unlike the base block 3 on which the load applied to the stem 3 bears, the choice of the synthetic material to be used for manufacture of the said cap 22 is not subject to considerations regarding the load resistance. It is therefore possible to use synthetic materials which ensure suitably constant aesthetic characteristics of the cap 22 over time, even when aggressive external agents are present. The external appearance of the foot 1 is thus not subject to deterioration over time. For example, while polyamide or polypropylene with glass-fibre fillers may be used for the base block, for the manufacture of the cap it is possible to use polypropylene alone, without a glass-fibre filler, if necessary also recycling surplus material from previous manufacturing cycles.

A further possibility offered by the present invention consists in the fact that the cap 22 may be made in a variety of colours, without this thereby affecting in any way the intrinsic properties of the material forming the base block 3.

Yet another possibility consists in manufacturing the cap 22 using thin stainless-steel sheet metal, said cap being combined with base blocks made both of synthetic material and of steel. Precisely because the cap does not have to withstand loads, the stainless-steel metal sheet forming the cap may be of limited thickness.

Figure 5 shows a view, in a cross-sectional plane, similar to that of Figure 4, of a variation of the embodiment described above. In Figure 5, parts which are identical or similar to the corresponding parts of Figures 1 to 4 are denoted by the same reference numbers.

The base block 3 again comprises a hemispherical seat 7 which is designed to receive the spherical end 15 of the stem 2. The hemispherical seat 7 is delimited laterally by an annular wall 6 which is, for example, circular. A plurality of ribs 8 extend, with decreasing height, towards the base 5 from the outer periphery of the annular wall 6. The ribs 8 divide the base 5 into segments 52, at least one of which (preferably at least two of which, diametrically opposite) are provided with through-holes 53 for receiving screws or the like for securing the base block to the ground or to the general support surface. The ribs 8 extend substantially as far as the periphery of the base 5, at which periphery a circumferential border 30, having a height, relative to the base, smaller than the height of the annular wall 6, projects from the base 5. A projecting fillet 32 is also provided along the periphery 31 of the base 5, said fillet having a thickness increasing downwards and having its bottom edge preferably inclined downwards.

The cushion 13 made of elastomeric material has a diameter so as to be flush with the periphery 31 of the base 5.

On the outer side, namely on the upper substantially smooth surface, the cap 22 is devoid of irregularities, recesses or interstices. The cap 22 has a central hole 23 having a diameter suitable for receiving the spherical end 15 of the stem 2. The cap 22 is again provided internally with a circumferential rib 24 which, in working conditions, namely when the cap is mounted on the base block, fits with slight interference onto an upper zone of the annular wall 6. The cap 22 is also shaped so as to form a peripheral skirt 35 which, on the inner side, comprises a circumferential abutment 36 designed to rest against the collar 30 and, lower down, a circumferential groove 34, the bottom edge 33 of which, inclined downwards, forms a tooth for engagement with the fillet 32 which in turn is received inside the groove 34 (as can clearly be seen in detail in the view, on a larger scale, according to Figure 5).

Variations and/or additions to that described and illustrated above may obviously be made.

As already mentioned, the invention is applicable generally to support feet having any spatial configuration, both of the fixed and of the articulated type and whatever the particular type of system for joining together the stem and the base block.

The covering cap may be made of synthetic material or other material, for example thin stainless-steel sheet metal.

Joining together of the cap and the base block may be performed using geometrical joining means, as in the examples described, or using joining means of another type.

The sealed joint between the cap and the base block, where desired, may be obtained in various ways, for example by means of gaskets, O-rings or adhesives.

## Claims

1. Support foot for heavy bodies, in particular operating machines and the like, comprising a stem (2) for joining the foot (1) to the machine, joined to a base block (3) intended to rest on a support surface, characterized by comprising a covering element (22) for the base block (3), which can be removably joined to the said base block (3) and is designed to cover the base block (3), while allowing the stem (2) to protrude.

2. Support foot according to Claim 1, characterized in that said covering element (22) is joined to the base block (3) in a substantially sealed manner so as to prevent infiltration of liquid into the base block (3).

3. Support foot according to Claim 2, characterized in that the sealed joint between the covering element (22) and the base block (3) is achieved by means of co-operation, with interference,- of respective walls (6,24,9,25) projecting from the base block (3) and the covering element.

4. Support foot according to any one of the preceding claims, characterized in that said element (22) for covering the base block (3) is joined to the base block (3) by geometrical joining means (26,10;32-34).

5. Support foot according to Claim 4, characterized in that said geometrical joining means (26,10;32-34) are snap-engagement means.

6. Support foot according to Claim 5, characterized in that said snap-engagement means are arranged along an outer peripheral edge (51;31) of the base block (3) and a corresponding outer peripheral edge (60;35) of the joining element (22).

7. Support foot according to any one of the preceding claims, characterized in that said covering element (22) is in the form of a cap substantially matching the base block (3).

8. Support foot according to any one of the preceding claims, characterized in that said covering element (22) is made of synthetic material, in particular polypropylene.

9. Support foot according to any one of Claims 1 to 7, characterized in that said covering element (22) is made of metal, in particular stainless steel.

10. Support foot according to any one of the preceding claims, characterized in that said base block (3) is made of rigid synthetic material able to withstand the loads applied to the stem (2), in particular polyamide or polypropylene with a glass-fibre filler.
